# FASCICULE DE BREVET EUROPEEN

(11) **EP 0 835 998 B1**
(45) Date de publication et mention de la délivrance du brevet: **09.01.2002**
(21) Numéro de dépôt: 97402409.3
(22) Date de dépôt: 13.10.1997
(51) Int. Cl.: F02D 9/06, F02D 9/10, F16K 1/22, F16K 27/02

(54) **Vanne, notamment pour tubulure d'une ligne d'échappement**
Ventil, insbesondere Auspuffkrümmerventil
Valve, especially for an exhaust pipe manifold

(30) Priorité: 11.10.1996 FR 9612462
(43) Date de publication de la demande: 15.04.1998
(73) Titulaire: ECIA - EQUIPEMENTS ET COMPOSANTS POUR L'INDUSTRIE AUTOMOBILE, F-25400 Audincourt (FR)
(72) Inventeur: Greber, Frédéric, 25150 Ecot (FR); Michelin, Joel, 25490 Dampierre Les Bois (FR); Barnabe, Jean-Pierre, 25700 Valentigney (FR); Barrieu, Edouard, 25200 Montbeliard (FR)
(74) Mandataire: Moncheny, Michel

(56) Documents cités:
- EP-A- 0 721 080
- DE-A- 3 707 904
- DE-A- 4 038 696
- DE-C- 4 426 028
- FR-A- 2 695 167
- GB-A- 936 472
- GB-A- 1 010 611
- US-A- 5 553 830

## Description

La présente invention concerne une vanne du type comportant un corps tubulaire et un volet d'obturation monté rotatif à l'intérieur du corps autour d'un axe de rotation sensiblement diamétral, selon le preambule de la revendication 1 (voir le document DE-A-4426028).

Une telle vanne est destinée en particulier à une tubulure de ligne d'échappement de véhicule automobile.

Certaines lignes d'échappement de véhicule automobile sont munies d'une tubulure principale reliée à des premiers organes d'échappement et d'une tubulure secondaire, en dérivation, reliée à des seconds organes d'échappement ayant, par exemple, des caractéristiques acoustiques et/ou catalytiques différentes de celles des premiers organes d'échappement.

Les organes d'échappement sont canalisés dans l'une ou l'autre des tubulures principale ou secondaire par fermeture de vannes agencées dans ces tubulures.

Dans les vannes connues, le volet d'obturation est porté par un arbre ou une paire de tourillons montés rotatifs dans des perçages de la paroi du corps tubulaire formant paliers.

Une telle vanne pose des problèmes d'étanchéité au niveau des paliers ainsi que des problèmes de maîtrise des jeux axiaux de l'arbre ou des tourillons dans les paliers. Ces jeux axiaux provoquent des bruits indésirables et conduisent à une usure prématurée des paliers.

De plus, les températures élevées de l'ordre de 1000°C résultant du passage des gaz d'échappement chauds provoquent la dilatation des différents organes constituant la vanne, ce qui conduit à des variations indésirables du couple de manoeuvre.

L'invention a pour but d'apporter une solution aux problèmes mentionnés précédemment et en particulier de fournir une vanne fonctionnant de manière satisfaisante à des températures élevées et avec une bonne étanchéité.

A cet effet, l'invention a pour objet une vanne du type précité, caractérisée par les caractéristiques dans la deuxième partie de la revendication 1.

Suivant des modes particuliers de réalisation, la vanne peut comporter l'une ou plusieurs des caractéristiques suivantes :
- ledit pivot comporte un doigt de pivotement solidaire du volet d'obturation et le corps tubulaire comporte sur sa paroi un évidement de réception de l'extrémité du doigt de pivotement ;
- lesdits moyens élastiques de sollicitation sont intégrés dans le palier ;
- le palier comporte un logement cylindrique de réception du tourillon, lequel logement est délimité par une paroi latérale de révolution et un fond, les moyens élastiques de sollicitation du volet étant disposés entre le fond du logement et le tourillon ;
- les moyens élastiques comportent une pile de rondelles élastiques bombées disposées têtes-bêches ;
- le fond du logement est traversé par une tige de commande du volet, la tige prolongeant axialement le tourillon ;
- le tourillon comporte une chape de fixation du volet d'obturation dans laquelle celui-ci est serti ; et
- le volet d'obturation comporte de part et d'autre d'une zone de fixation du volet au tourillon des prolongements ayant une forme sensiblement complémentaire à celle de la zone de liaison entre le corps et le palier.

L'invention sera mieux comprise à la lecture de la description qui va suivre, donnée uniquement à titre d'exemple, et faite en se référant aux dessins sur lesquels :
- la figure 1 est une vue en coupe longitudinale d'une vanne selon l'invention ;
- la figure 1A est une vue en coupe longitudinale d'un détail d'une variante de réalisation de la vanne de la figure 1 ;
- la figure 2 est une vue en coupe transversale de la vanne prise suivant la ligne II-II de la figure 1; et
- la figure 3 est une vue partielle en coupe longitudinale de la vanne prise suivant la ligne III-III de la figure 2.

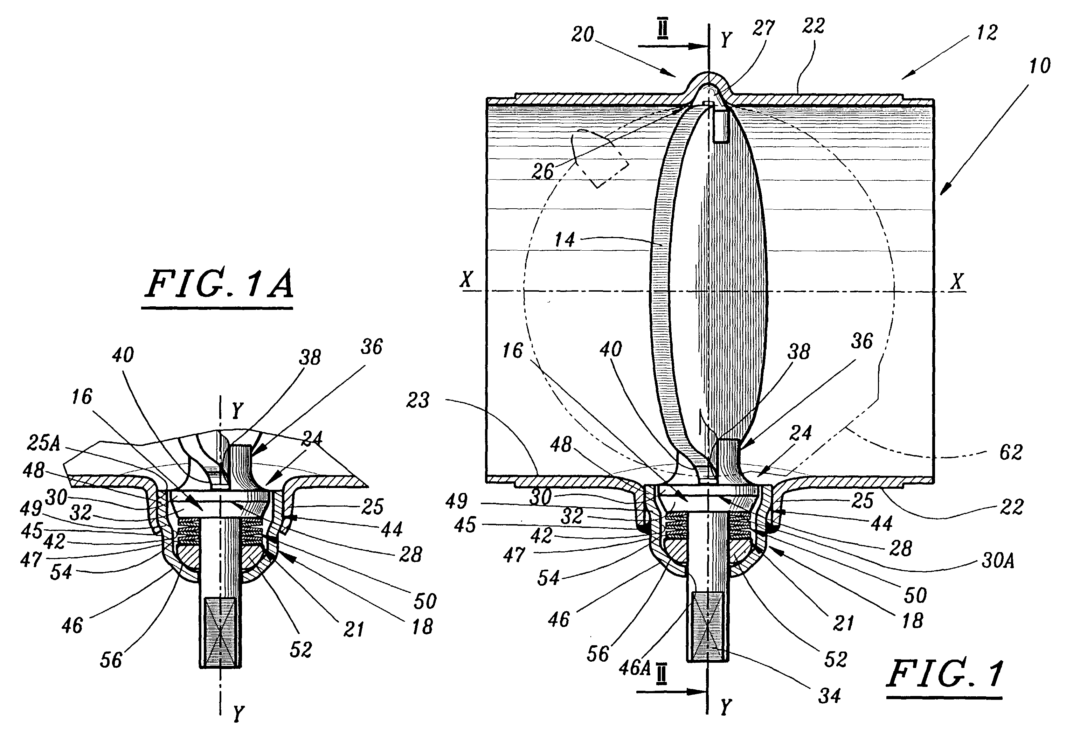

Sur les figures 1 à 3 est représentée une vanne 10 selon l'invention destinée à être montée sur un tronçon de tubulure d'échappement de véhicule automobile.

Elle comporte essentiellement un corps cylindrique 12 d'axe X-X, un volet d'obturation 14 monté rotatif à l'intérieur du corps autour d'un axe de rotation Y-Y sensiblement diamétral. Le volet 14 est monté rotatif par l'intermédiaire d'un tourillon 16 tournant dans un palier 18 solidaire du corps 12. Un pivot 20 est en outre disposé au point de l'axe de rotation Y-Y diamétralement opposé au tourillon 16 afin d'assurer la rotation du volet par rapport au corps 12. La vanne 10 comporte de plus des moyens élastiques 21 sollicitant le volet d'obturation 14 suivant son axe de rotation Y-Y vers le pivot 20.

Le corps 12 comporte un tronçon tubulaire 22 délimitant intérieurement un conduit cylindrique 23 de section circulaire. Une ouverture circulaire 24 pour la fixation du palier 18 traverse le tronçon tubulaire. La périphérie de l'ouverture 24 est déformée vers l'extérieur pour former un canon 25 d'axe Y-Y.

Le pivot 20 comporte un évidement 26 pour la réception d'une extrémité en forme d'ogive d'un doigt de pivot 27 solidaire du volet 14. Cet évidement est ménagé sur la paroi du conduit 23 en un point diamétralement opposé à l'ouverture 24. L'évidement 26 est ouvert vers l'intérieur du conduit et est délimité par une déformation de la paroi.

Le tourillon 16 comporte un corps de révolution 28 délimité depuis le volet 14 vers l'extérieur de la vanne par une surface cylindrique 30 et une surface tronconique 32 convergente vers l'extérieur. Le corps 28 est reçu libre en rotation dans le palier 18. Une tige de commande 34 venue de matière avec le tronçon 30 prolonge le tourillon vers l'extérieur. Le tourillon 16 comporte en outre une chape 36 prolongeant axialement le corps 28 vers l'intérieur du conduit 23. Cette chape délimite une gorge 38 dans laquelle est reçue une zone de fixation 40 du volet d'obturation.

Le palier 18 comprend un logement 42 délimité par une douille métallique 44. Celle-ci comporte d'une part une paroi latérale de révolution 45 et d'autre part un fond 46. La paroi latérale 45 comporte un tronçon cylindrique principal 47 relié au fond 46 et prolongé à l'extrémité ouverte de la douille par un évasement cylindrique 48 relié à celle-ci par une zone de déformation tronconique 49. Ainsi, l'évasement cylindrique 48 entoure le tourillon 16, avec un jeu périphérique maintenu entre eux pour éviter tout contact de la paroi cylindrique 30 avec la douille.

Le fond 46 est muni axialement d'une ouverture 46A pour le passage de la tige de commande 34. La paroi du fond 46 est tronconique et converge vers l'ouverture 46A.

L'évasement 48 et la zone tronconique 49 de la douille sont reçus dans le canon 25. La douille est fixée suivant l'axe Y-Y dans le canon 25 par une soudure pratiquée entre l'extrémité du canon et le tronçon principal 47.

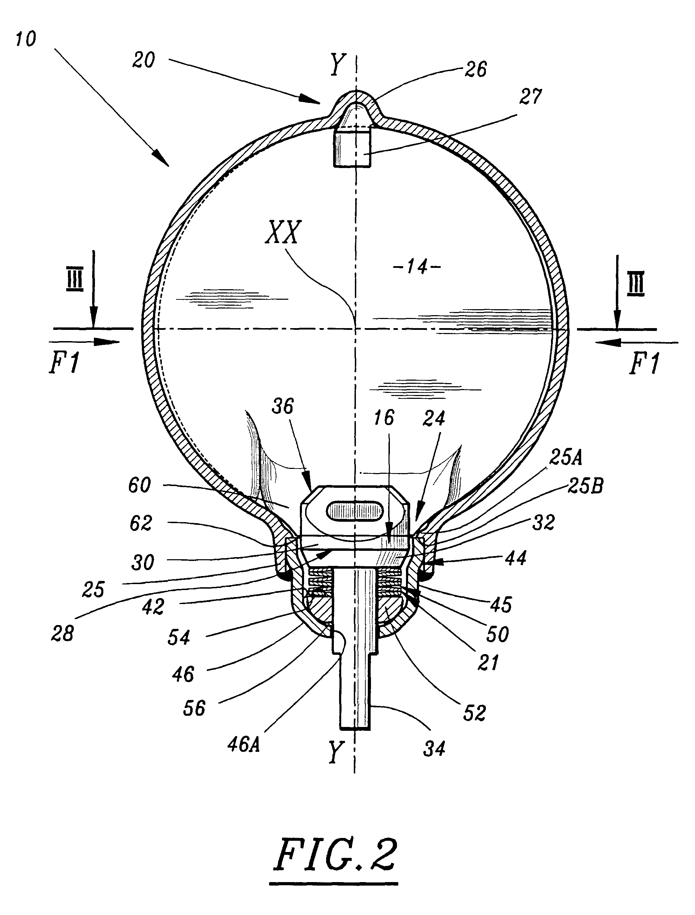

Le canon 25 est muni intérieurement dans la zone de liaison avec le tronçon tubulaire 22 d'un bourrelet périphérique 25A (figure 2). Ce bourrelet est usiné du côté orienté vers l'extérieur du conduit 23 pour former une surface plane 25B sur laquelle s'appuie l'extrémité de la douille 44. Ainsi le bourrelet forme une butée positionnant axialement la douille 44. Ce bourrelet est obtenu par refoulement de matière le long de la paroi intérieure du canon 25 ou encore par un suralésage de cette même paroi.

En variante représentée sur la figure 1A, la douille 44 n'est pas soudée mais sertie dans le canon 25 par déformation de l'extrémité de celui-ci sur la zone tronconique 49.

Les moyens élastiques 21 de sollicitation du volet sont intégrés au palier 18. Ils comportent une pile 50 de rondelles élastiques tronconiques, par exemple de type "Belleville" disposées têtes-bêches et enfilées sur la tige de commande 34. La pile 50 prend appui d'une part sur une face annulaire d'extrémité 30A du corps 28 et d'autre part sur un joint torique d'étanchéité 52. Ce joint torique 52 a en section sensiblement la forme d'un quart de disque. Il présente une face de support plane 54 en contact avec la pile 50 et une face bombée 56 s'appuyant tangentiellement sur le fond tronconique 46 de la douille. Le joint est réalisé dans un matériau très dur ayant un coefficient de frottement très faible, de la céramique par exemple. Le passage circulaire traversant le joint a un diamètre sensiblement égal à celui de la tige 34, de sorte que cette dernière est guidée axialement par le joint 34 prenant appui sur la douille 44.

Le volet 14 a, comme représenté sur la figure 2, une forme générale de disque légèrement elliptique de dimensions adaptées pour être contenu dans le conduit 23. Il comporte de part et d'autre de la zone de fixation 40 des prolongements radiaux 60 visibles sur la figure 2. Ces derniers ont une forme incurvée sensiblement complémentaire à celle présentée par la zone de liaison entre la douille 44 et le canon 25. En particulier, la ligne courbe délimitant chaque prolongement épouse sensiblement la forme du bourrelet 25A lorsque le volet est en position d'obturation, minimisant ainsi les fuites de gaz dans cette zone. Ainsi, les prolongements 60 ont une forme sensiblement complémentaire à celle de la zone de liaison entre le corps 12 et le palier 18.

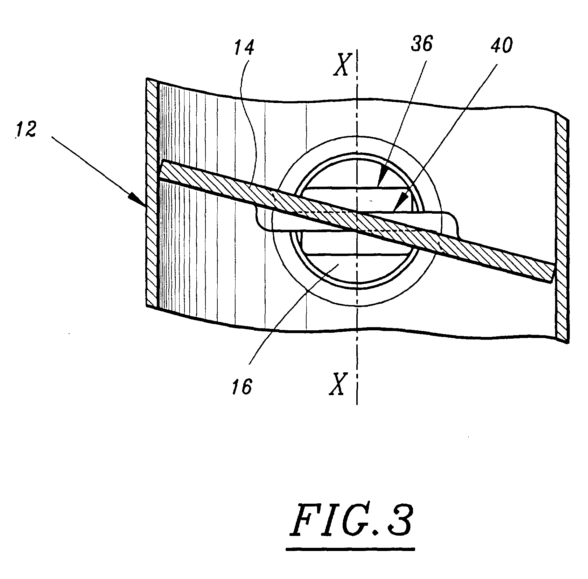

La zone de fixation 40 et les prolongements 60 sont, comme représenté sur la figure 3, décalés angulairement autour de l'axe Y-Y par rapport au plan principal du volet. Ce décalage angulaire est par exemple de 15°. Il est obtenu par déformation plastique du volet avant montage.

Ce décalage facilite le sertissage du volet dans la chape 36, le sertissage étant effectué alors que la chape s'étend perpendiculairement à l'axe du conduit.

Afin d'assurer la réalisation d'une telle vanne, on fabrique d'abord le corps cylindrique 12 à partir d'un tube dans lequel est pratiquée l'ouverture 24. L'évidement 26 est obtenu par déformation plastique du tube par exemple par emboutissage.

Le volet 14, préalablement déformé et équipé du doigt 27 est ensuite mis en place dans le passage 23 dans la position transitoire représentée en traits mixtes sur la figure 1. Dans cette position, le volet est incliné, le doigt 27 en saillie n'étant pas encore reçu dans l'évidement 26.

Le corps 12 est ensuite déformé élastiquement par sollicitation l'un vers l'autre des côtés du corps en appliquant des forces opposées suivant le sens des flèches F1 de la figure 2. Le corps 12 subit alors une ovalisation de sorte que le volet 14 peut être mis en place par rotation.

La douille 44 dans laquelle ont été préalablement disposés le joint 52, la pile de rondelles 50 et le tourillon 16 est ensuite mise en place et soudée ou sertie dans le canon 25. Lors de la mise en place de la douille, la zone de fixation du volet est reçue dans la chape 36. La douille 44 est soudée ou sertie alors qu'elle est maintenue comprimée contre la surface de butée 25B à l'encontre de l'action de la pile de rondelles 50.

Le volet 14 est enfin serti dans la chape 36. A cet effet, une lumière non représentée est pratiquée dans la zone de fixation 40 du volet afin de permettre un déplacement de la matière de la chape 36 lors du sertissage.

La vanne représentée ici permet une obturation complète du conduit 23. Dans sa position d'obturation représentée sur la figure 3, le volet s'étend sensiblement transversalement dans le conduit. Le plan principal du volet est décalé d'environ 15° par rapport au plan transversal du corps 12. Dans cette position, la zone de fixation 40 s'étend transversalement.

Le volet est déplaçable en rotation autour de l'axe Y-Y depuis la position d'obturation de la figure 3 jusqu'à une position d'ouverture dans laquelle il s'étend longitudinalement à l'intérieur du conduit.

On comprend que la pile 50 de rondelles élastiques assure une sollicitation permanente du volet 14 suivant son axe de rotation Y-Y vers le pivot 20. Cette contrainte permanente assure une pression constante du doigt de pivot 27 sur le fond de l'évidement 26. Ceci évite les vibrations au niveau de l'axe de rotation et ainsi les nuisances sonores qui en résultent. En particulier, la contrainte axiale imposée par la pile de rondelles 50 évite les vibrations radiales du tourillon 16 et de la tige 34.

De plus, les rondelles bombées sont empilées têtes-bêches en contact les unes avec les autres sur toute leur périphérie, de sorte qu'elles constituent avec le joint 52 et la face d'extrémité 30A du tourillon un écran étanche aux gaz d'échappement garantissant l'étanchéité du palier 18. Ainsi, la pile de rondelles assure à la fois la sollicitation du volet et l'étanchéité de la vanne.

Par ailleurs, lorsque le volet 14 est en position d'obturation, comme représenté sur la figure 2, les prolongements 60 assurent une bonne étanchéité du volet au niveau du tourillon 16.

Il est à noter que le volet, formé par une simple tôle offre, en position d'ouverture totale, une très faible résistance au passage des gaz circulant dans le conduit.

En variante non représentée, le doigt 27 est venu de matière avec le tourillon 16 et est lié à celui-ci par un bras allongé s'étendant le long du volet 14.

## Revendications

1. Vanne (10) du type comportant un corps tubulaire (12) et un volet d'obturation (14) monté rotatif à l'intérieur du corps (12) autour d'un axe (Y-Y) de rotation sensiblement diamétral, dans laquelle le volet d'obturation (14) est solidaire d'un tourillon (16) monté rotatif autour dudit axe (Y-Y) dans un palier (18), un pivot (20) étant en outre disposé au point de l'axe (Y-Y) de rotation diamétralement opposé au tourillon (16) pour assurer la rotation du volet d'obturation (14) par rapport au corps (12), laquelle vanne comporte en outre des moyens élastiques (21) de sollicitation du volet d'obturation (14) suivant son axe de rotation (Y-Y) vers ledit pivot (20), le palier (18) comportant un logement cylindrique (42) de réception du tourillon (16), lequel logement (42) est délimité par une paroi latérale de révolution (45) et un fond (46), **caractérisée en ce que** le fond (46) est à surface tronconique et muni d'une ouverture (46A) au travers de laquelle s'étend une tige de commande (34) du tourillon, et **en ce que** les moyens élastiques de sollicitation (21) du volet sont disposés entre un joint torique (52) s'appuyant sur la surface tronconique du fond et un corps (28) du tourillon (16).

2. Vanne selon la revendication 1, **caractérisée en ce que** ledit pivot (20) comporte un doigt de pivotement (27) solidaire du volet d'obturation (14) et le corps tubulaire (12) comporte sur sa paroi un évidement (26) de réception de l'extrémité du doigt de pivotement (27).

3. Vanne selon la revendication 1 ou 2, **caractérisée en ce que** les moyens élastiques (21) comportent une pile (50) de rondelles élastiques bombées disposées têtes-bêches.

4. Vanne selon l'une quelconque des revendications précédentes, **caractérisée en ce que** le tourillon (16) comporte une chape (36) de fixation du volet d'obturation (14) dans laquelle celui-ci est serti.

5. Vanne selon l'une quelconque des revendications précédentes, **caractérisée en ce que** le volet d'obturation (14) comporte de part et d'autre d'une zone de fixation (40) du volet (14) au tourillon (16) des prolongements (60) ayant une forme sensiblement complémentaire à celle de la zone de liaison entre le corps (12) et le palier (18).

## Patentansprüche

1. Ventil (10), das einen rohrförmigen Körper (12) und eine im Inneren des Körpers (12) um eine im wesentlichen diametrale Drehachse (Y-Y) drehbar montierte Verschlussklappe (14) aufweist und bei dem die Verschlussklappe (14) mit einem Drehzapfen (16) fest verbunden ist, der in einem Lager (18) um die Achse (Y-Y) drehbar montiert ist, wobei außerdem an dem dem Drehzapfen (16) diametral entgegengesetzten Punkt der Drehachse (Y-Y) ein Drehlager (20) angeordnet ist, um die Drehung der Verschlussklappe (14) bezüglich des Körpers (12) zu gewährleisten, das Ventil außerdem elastische Mittel (21) zur Beaufschlagung der Verschlussklappe (14) in seiner Drehachse (Y-Y) auf das Drehlager (20) zu aufweist und das Lager (18) eine durch eine Seitenwand (45) mit Rotationskörperform und einen Boden (46) abgegrenzte zylindrische Aussparung (42) zur Aufnahme des Drehzapfens (16) besitzt, **dadurch gekennzeichnet, dass** der Boden (46) eine kegelstumpfförmige Fläche aufweist und mit einer Öffnung (46A) versehen ist, durch die sich eine Stange (34) zur Betätigung des Drehzapfens erstreckt, und dass die elastischen Mittel (21) zur Beaufschlagung der Klappe zwischen einem sich an der kegelstumpfförmigen Fläche des Bodens abstützenden Wulstring (52) und einem Körper (28) des Drehzapfens (16) angeordnet sind.

2. Ventil nach Anspruch 1, **dadurch gekennzeichnet, dass** das Drehlager (20) einen mit der Verschlussklappe (14) fest verbundenen Drehfinger (27) umfasst und der rohrförmige Körper (12) auf seiner Wand eine Aussparung (26) zur Aufnahme des Endes des Drehfingers (27) aufweist.

3. Ventil nach Anspruch 1 oder 2, **dadurch gekennzeichnet, dass** die elastischen Mittel (21) aus einem Stapel (50) von einander entgegengesetzt angeordneten gewölbten Federscheiben bestehen.

4. Ventil nach einem der vorhergehenden Ansprüche, **dadurch gekennzeichnet, dass** der Drehzapfen (16) eine Gabel (36) zur Befestigung der Verschlussklappe (14) aufweist, in welcher diese verquetscht ist.

5. Ventil nach einem der vorhergehenden Ansprüche, **dadurch gekennzeichnet, dass** die Verschlussklappe (14) zu beiden Seiten eines Bereichs (40) zur Befestigung der Klappe (14) an dem Drehzapfen (16) Verlängerungen (60) aufweist, die eine Form haben, die zu der des Verbindungsbereichs zwischen dem Körper (12) und dem Lager (18) im wesentlichen komplementär ist.

## Claims

1. A valve (10) of the type comprising a tubular body (12) and a sealing flap (14) rotatably mounted within the body (12) about a substantially diametral axis (Y-Y) of rotation, in which the sealing flap (14) is integral with a journal (16) rotatably mounted about the said axis (Y-Y) in a bearing (18), a pivot (20) being furthermore arranged at the point of the axis (Y-Y) of rotation diametral to the journal (16) to ensure rotation of the sealing flap (14) relative to the body (12), the said valve also comprising elastic means (21) for actuating the sealing flap (14) following its axis of rotation (Y-Y) towards the said pivot (20), the bearing (18) comprising a cylindrical seat (42) for accommodating the journal (16), the said seat (42) being delimited by a side wall of revolution (45) and a base (46), **characterised in that** the base (46) has a truncated surface and is provided with an opening (46A) via which a stem (34) for controlling the journal extends, and **in that** the elastic means for actuating (21) the flap are arranged between an O-ring (52) supported on the truncated surface of the base and a body (28) of the journal (16).

2. A valve according to Claim 1, **characterised in that** the said pivot (20) comprises a pivoting finger (27) integral with the sealing flap (14) and the tubular body comprises, on its wall, a recess (26) for receiving the end of the pivoting finger (27).

3. A valve according to Claim 1 or 2, **characterised in that** the elastic means (21) consists of a stack (50) of convex elastic washers arranged top to bottom.

4. A valve according to any one of the preceding claims, **characterised in that** the journal (16) comprises a holder (36) for mounting the sealing flap (14), into which the latter is set.

5. A valve according to any one of the preceding claims, **characterised in that** the sealing flap (14) comprises, on both sides of a zone (40) for mounting the flap (14) to the journal (16), extensions (60) of a shape substantially complementary to that of the zone linking the body (12) and die bearing (18).
